# EUROPEAN PATENT APPLICATION

(11) **EP 3 604 459 A1**
(43) Date of publication of application: **05.02.2020**
(21) Application number: 18770288.1
(22) Date of filing: 09.03.2018
(51) Int. Cl.: C09D 11/30, B41J 2/01, B41M 5/00

(54) **INK COMPOSITION FOR PHOTOCURABLE INK JET PRINTING**

(30) Priority: 23.03.2017 JP 2017058288
(71) Applicant: Sakata INX Corporation, Osaka-shi, Osaka 550-0002 (JP)
(72) Inventor: SATO Yoichi, Osaka-shi Osaka 550-0002 (JP); NAKASHIMA Okinori, Osaka-shi Osaka 550-0002 (JP); MYOSE Takuya, Osaka-shi Osaka 550-0002 (JP); KAWABATA Jun, Osaka-shi Osaka 550-0002 (JP)
(74) Representative: Grünecker Patent- und Rechtsanwälte PartG mbB
(86) International application number: PCT/JP2018/009132
(87) International publication number: WO 2018/173785

(57) **Abstract**

An object of the present invention is to provide a composition for primers that make inkjet printing on the surfaces of molded products of polyolefins possible, wherein such composition simultaneously achieves sufficiently high adhesion and lowered surface tackiness to fully function as a primer, while also allowing the primer layer surface to be separated from other surface to which it has adhered during storage, without causing damage to either surface. As a means for achieving this object, a photocurable inkjet printing ink composition containing (A) to (C) below is provided: (A) a chlorinated polyolefin; (B) monofunctional monomer 1 with a glass transition temperature (Tg) of 0°C or below; and (C) monofunctional monomer 2 with a glass transition temperature (Tg) of 60°C or above; wherein, the content of (A) in the ink composition is 0.2 percent by mass or higher; the total content of (B) and (C) in the ink composition is 40 percent by mass or higher; and the mass-based ratio of the content of (B) and that of (C), or (C)/(B), is 0.80 to 3.00.

## Description

### Technical Field

The present invention relates to a photocurable inkjet printing ink composition. More specifically, it relates to a composition particularly suited for primers used on the surfaces of molded products of polypropylene and other polyolefins.

### Background Art

Printing on a molded product of polycarbonate using an active energy ray-curable inkjet ink composition containing a resin such as vinyl chloride resin as well as a monofunctional monomer, is public knowledge as described in Patent Literature 1; whereas, adopting a coating composition for the purpose of coating the surface of a molded product of polyolefin with a resin, wherein such composition contains a chlorinated polyolefin and one polymerizable unsaturated group per molecule, is public knowledge, according to Patent Literature 2.

Additionally, printing on a molded product of resin using an inkjet ink containing an isobornyl acrylate or tetrahydrofurfuryl acrylate along with a vinyl chloride resin, is also public knowledge according to Patent Literature 3.

Furthermore, forming a coating layer for printing on the surface of a polypropylene film, etc., wherein such layer contains a chlorinated polyolefin resin and an active energy ray-polymerizable functional group, is public knowledge according to Patent Literature 4.

As described in Patent Literature 4, etc., printing on the surface of a molded product of polyolefin using an ink composition is preceded by applying a primer on the surface of the molded product of polyolefin.

Such primer is very soft and achieves a lower crosslinking density after curing, thereby delivering better adhesion to the molded product of polyolefin and the ink composition.

Such primer does not present any particular problems if an ink composition is to be printed over the entire primer application surface immediately after the primer has been applied, because the surface of the primer will not be exposed.

However, there may be cases where the primer layer surface comes in contact with other material, including, for example, when products on which the primer has been applied are stacked together for storage until they are printed with an ink composition, or when an ink composition is not printed over the entire primer application surface; in these cases, the tackiness of the primer layer surface can make it difficult to separate the primer application surface from other surface to which it has adhered, and even after a successful separation, the primer layer or the surface layer of the other surface may peel.

With normal primers, where the better the adhesion, the higher the surface tackiness, it was difficult to improve the adhesion of the primer to the surface of a molded product of polyolefin, while at the same time lowering the tackiness of the primer layer surface.

Additionally, in the sense that inkjet printing only becomes possible when the ink is flowable enough to be discharged from a nozzle, achieving such high flowability with normal primers was also difficult.

### Background Art Literature

### Patent Literature

Patent Literature 1: Japanese Patent Laid-open No. 2016-65212
Patent Literature 2: Japanese Patent Laid-open No. Sho 58-162640
Patent Literature 3: Japanese Patent Laid-open No. 2014-177551
Patent Literature 4: Japanese Patent Laid-open No. 2015-189148

### Summary of the Invention

### Problems to Be Solved by the Invention

In light of the above, an object of the present invention is to provide a composition particularly suited for primers that make inkjet printing on the surfaces of molded products of polyolefins possible, wherein such composition simultaneously achieves sufficiently high adhesion and lowered surface tackiness to fully function as a primer, while also allowing the primer layer surface to be separated from other surface to which it has adhered during storage, without causing damage to either surface.

### Means for Solving the Problems

As a result of studying in earnest to achieve the aforementioned object, the inventors completed the present invention after finding that, by using a photocurable inkjet printing ink composition that contains a chlorinated polyolefin as well as a photopolymerizable component constituted by specific quantities of specific monofunctional monomers, and by adjusting the glass transition temperature of its coating film, the aforementioned object could be achieved fully.

To be specific, the present invention is a photocurable inkjet printing ink composition containing (A) to (C) below:
(A) a chlorinated polyolefin;
(B) monofunctional monomer 1 with a glass transition temperature (Tg) of 0°C or below; and
(C) monofunctional monomer 2 with a glass transition temperature (Tg) of 60°C or above;
   wherein,
   the content of (A) in the ink composition is 0.2 percent by mass or higher;
   the total content of (B) and (C) in the ink composition is 40 percent by mass or higher; and
   the mass-based ratio of the content of (B) and that of (C), or (C)/(B), is 0.80 to 3.00.

### Effects of the Invention

The present invention can demonstrate the significant effect of providing a composition particularly suited for primers used on the surfaces of molded products of polyolefins, wherein such composition simultaneously achieves sufficiently high adhesion and lowered surface tackiness to fully function as a primer, while also allowing the primer layer surface to be separated from other surface to which it has adhered during storage, without causing damage to either surface.

### Mode for Carrying Out the Invention

The photocurable inkjet printing ink composition proposed by the present invention (hereinafter also referred to as "ink composition proposed by the present invention") is explained in detail below.

### <(A) Chlorinated Polyolefin>

The polyolefin used as the material for the chlorinated polyolefin is not limited in any way, but examples include crystalline polypropylenes, non-crystalline polypropylenes, ethylene-propylene copolymers, ethylene-propylene-diene copolymers, ethylene-propylene-α-olefin copolymers, propylene-α-olefin copolymers, ethylene-vinyl acetate copolymers, etc. It should be noted that polyvinyl chlorides are not included in the scope of this polyolefin.

The content of the chlorinated polyolefin in the composition proposed by the present invention is 0.2 percent by mass or higher, or preferably 0.3 to 20 percent by mass, or more preferably 1.5 to 15 percent by mass. If the content is lower than 0.2 percent by mass, the adhesion of the ink composition to the molded product of polyolefin will drop.

Ethylene-propylene-α-olefin copolymers are resins obtained through copolymerization of a primary substance being ethylene-propylene and an α-olefin, while propylene-α-olefin copolymers are resins obtained through copolymerization of a primary substance being propylene and an α-olefin. The form of copolymer is not limited in any way, where examples include block copolymers, random copolymers, etc. Examples of the α-olefin component include ethylene, 1-butene, 1-pentene, 1-hexene, 1-heptene, 1-octene, 4-methyl-1-pentene, etc. It should be noted that, if a propylene-α-olefin copolymer is used as the material, preferably the content of the propylene component is 50 percent by mol or higher from the viewpoint of adhesion to the polyolefin resin to be printed on.

Ethylene-vinyl acetate copolymers are resins obtained through copolymerization of an ethylene and a vinyl acetate monomer. The mol ratio of ethylene and vinyl acetate in the ethylene-vinyl acetate copolymer is not limited in any way, but preferably the vinyl acetate component is 5 to 45 percent by mol from the viewpoints of bonding property with polar substances and coating film strength.

Regarding the polyolefin resin used as the material for the chlorinated polyolefin in the present invention, one type may be used alone or two or more types may be combined. Also, the melting point of the polyolefin resin is preferably 100 to 180°C, or more preferably 120 to 170°C.

The chlorine content of the chlorinated polyolefin in the present invention is normally 10 to 50 percent by mass, or preferably 15 to 40 percent by mass, or more preferably 30 to 40 percent by mass, or yet more preferably 32 to 40 percent by mass. When the chlorine content is 10 percent by mass or higher, sufficient solubility in monofunctional monomers 1 and 2 can be expressed. When the chlorine content is 50 percent by mass or lower, on the other hand, good adhesion with polyolefinic base materials can be maintained. The chlorine content represents a value measured according to JIS-K7229.

The weight-average molecular weight of the chlorinated polyolefin in the present invention is not limited in any way, but preferably it is 3,000 to 200,000. When the weight-average molecular weight is 3,000 or higher, the cohesion force of the chlorinated polyolefin and its adhesion to the base material can be maintained at good levels. When the weight-average molecular weight is 200,000 or lower, good compatibility with the monofunctional monomers can be maintained.

It should be noted that the weight-average molecular weight of the chlorinated polyolefin in the present invention represents a value measured by gel permeation chromatography (GPC) using polystyrene resin as the standard.

Normally a stabilizer is added to the chlorinated polyolefin. Examples of the stabilizer include epoxy compounds. Although the epoxy compounds are not limited in any way, epoxy compounds compatible with chlorinated resins are preferred. Examples of epoxy compounds include compounds whose equivalent weight of epoxy is around 100 to 500 and which has at least one epoxy group per molecule. Epoxy compounds include the following, for example: Epoxidized vegetable oils obtained by epoxidizing vegetable oils containing natural unsaturated groups with peracetic acid or other peracids (epoxidized soybean oil, epoxidized flaxseed oil, etc.); epoxidized fatty acid esters obtained by epoxidizing oleic acid, fatty acid of tall oil, fatty acid of soybean oil and other unsaturated fatty acids; epoxidized tetrahydrophthalate and other epoxidized alicyclic compounds; ethers obtained by condensing bisphenol A or polyalcohols with epichlorohydrin, such as bisphenol A glycidyl ether, ethylene glycol glycidyl ether, propylene glycol glycidyl ether, glycerol polyglycidyl ether, sorbitol polyglycidyl ether, etc.; and monoepoxidized compounds, the representative of which include butyl glycidyl ether, 2-ethyl hexyl glycidyl ether, decyl glycidyl ether, stearyl glycidyl ether, allyl glycidyl ether, phenyl glycidyl ether, sec-butyl phenyl glycidyl ether, tert-butyl phenyl glycidyl ether, phenol polyethylene oxide glycidyl ether, etc. Other examples of the stabilizer include stabilizers being used as stabilizers for polyvinyl chloride resins. These stabilizers include calcium stearate, lead stearate, and other metal soaps, dibutyltin dilaurate, dibutyl malate, and other organic metal compounds, and hydrotalcite compounds. One type of stabilizer may be used alone, or two or more types may be combined. When adding a stabilizer, preferably its additive quantity is 1 to 20 percent by mass (in equivalent solids content) relative to the chlorinated polyolefin.

The chlorinated polyolefin in the present invention may be an acid-modified chlorinated polyolefin to which an α,β-unsaturated carboxylic acid and/or derivative thereof has been introduced. The α,β-unsaturated carboxylic acids and derivatives thereof include, for example, maleic acid, maleic acid anhydride, fumaric acid, citraconic acid, citraconic acid anhydride, mesaconic acid, itaconic acid, itaconic acid anhydride, aconitic acid, aconitic acid anhydride, himic acid anhydride, (meth)acrylic acid, ester (meth)acrylate, etc. The quantity by which the α,β-unsaturated carboxylic acid and/or derivative thereof is introduced is not limited in any way, but it is preferably 0 to 20 percent by mass, or more preferably 0 to 10 percent by mass, relative to 100 percent by mass of the chlorinated polyolefin.

<(B) Monofunctional Monomer 1 with a Glass Transition Temperature (Tg) of 0°C or Below>

For the (B) monofunctional monomer 1 with a glass transition temperature (Tg) of 0°C or below under the present invention, ethyl carbitol acrylate (V#190) (-67°C), ethyl acrylate (-20°C), butyl acrylate (-55°C), 2-ethyl hexyl acrylate (-70°C), or other monomer may be used.

The content of the (B) monofunctional monomer 1 with a glass transition temperature (Tg) of 0°C or below in the ink composition under the present invention is 10 percent by mass or higher, or preferably 20 to 40 percent by mass.

<(C) Monofunctional Monomer 2 with a Glass Transition Temperature (Tg) of 60°C or Above>

The (C) monofunctional monomer 2 with a glass transition temperature (Tg) of 60°C or above under the present invention may be acryloyl morpholine (ACMO) (145°C), N-vinyl caprolactam (VCAP) (125°C), styrene (80°C), methyl methacrylate (105°C), ethyl methacrylate, acrylonitrile (97°C), methyl styrene, acryl amide (165°C), acrylic acid (106°C), dicyclopentanyl methacrylate (175°C), dicyclopentanyl acrylate (120°C), isobornyl methacrylate (173°C), isobornyl acrylate (IBXA) (97°C), cyclohexyl methacrylate (66°C), or 1-adamantyl methacrylate (153°C).

The content of the (C) monofunctional monomer 2 with a glass transition temperature (Tg) of 60°C or above in the ink composition under the present invention is 20 percent by mass or higher, or preferably 40 to 55 percent by mass. If the content is lower than 20 percent by mass, tackiness will worsen.

In addition, the total content of (B) and (C) in the ink composition is 40 percent by mass or higher, or preferably 60 percent by mass or higher, or more preferably 70 percent by mass or higher. If the total content is lower than 40 percent by mass, the surface of the formed coating film will become tacky.

Also, the mass-based ratio of the content of (B) and that of (C), or (C)/(B), is 0.80 to 3.00, or preferably 1.20 to 2.20, or more preferably 1.50 to 1.80. If this ratio exceeds 3.00, the coating film will have poor adhesion to the base material.

### <Monofunctional Monomers with a Glass Transition Temperature (Tg) of Above 0°C, but Below 60°C>

Under the present invention, monofunctional monomers other than those mentioned above may be used concomitantly as the photopolymerizable monomers, to the extent that doing so does not impair the effects of the present invention.

These monofunctional monomers include vinyl acetate (32°C), n-propyl methacrylate, n-butyl methacrylate, and methyl acrylate (8°C).

It should be noted that 2-hydroxy-3-phenoxy propyl acrylate will not be contained.

### <Polyfunctional Monomers and Photopolymerizable Oligomers>

Under the present invention, the polyfunctional monomers and photopolymerizable oligomers or polymers mentioned below may be used concomitantly as other photopolymerizable components that are not monofunctional monomers, to the extent that doing so does not impair the effects of the present invention.

These other photopolymerizable components include monomers, prepolymers, oligomers, etc., that can be used without any limitation so long as they are ethylenic double bond-containing compounds.

These photopolymerizable components include ethylene glycol di(meth)acrylate, propane diol di(meth)acrylate, butane diol di(meth)acrylate, 1,6-hexane diol diacrylate (HDDA), dipropylene glycol di(meth)acylate, tripropylene glycol di(meth)acrylate, and other (poly)alkylene glycol di(meth)acrylate, trimethylol propane tri(meth)acrylate and ethylene oxide-modified products thereof, pentaerythritol tetra(meth)acrylate and ethylene oxide-modified products thereof, dipentaerythritol penta(meth)acrylate and ethylene oxide-modified products thereof, dipentaerythritol hexa(meth)acrylate and ethylene oxide-modified products thereof, urethane (meth)acrylate, epoxy (meth)acrylate, polyester (meth)acrylate, etc., where any one type of these other photopolymerizable components may be used, or two or more types may be used, if necessary.

### <Non-polymerizable Resins>

Furthermore, amine-modified acrylate oligomers (CN371NS, etc.), and aromatic ketone-formaldehyde condensed hydrogenated ketone resins may be used concomitantly as non-polymerizable resins. Any one type of the aforementioned other photopolymerizable components and non-polymerizable resins may be used, or two or more types may be used, if necessary.

### <Photopolymerization Initiator>

The photocurable inkjet printing ink composition proposed by the present invention contains a photopolymerization initiator.

The photopolymerization initiator is preferably an acylphosphine oxide-based photopolymerization initiator (compound) or thioxanthone-based photopolymerization initiator (compound) that expresses its initiator function under light of 300 to 450 nm in wavelength. It should be noted that the above statement "...expresses its initiator function under light of 300 to 450 nm in wavelength" means the initiator has light-absorbing properties over the entire wavelength region of 300 to 450 nm. By using such acylphosphine oxide-based photopolymerization initiator or thioxanthone-based photopolymerization initiator, LED curing property can be further added to the photocurable inkjet printing ink composition proposed by the present invention.

Specific examples of acylphosphine oxide-based photopolymerization initiators include 2,4,6-trimethyl benzoyl-diphenyl-phosphine oxide (product name: TPO, manufactured by Lambson), and bis(2,4,6-trimethyl benzoyl)-phenyl phosphine oxide (product name: IRGACURE819, manufactured by BASF), and the like.

Also, specific examples of thioxanthone-based photopolymerization initiators include 2,4-diethyl thioxanthone (DETX), 2-isopropyl thioxanthone, and 4-isopropyl thioxanthone, and the like.

The content of any such acylphosphine oxide-based photopolymerization initiator or thioxanthone-based photopolymerization initiator is preferably in a range of 3 to 25 percent by mass, or more preferably in a range of 5 to 15 percent by mass, relative to the total mass of photopolymerizable components. If the content of the acylphosphine oxide-based photopolymerization initiator or thioxanthone-based photopolymerization initiator is lower than 3 percent by mass, the curing property may not be sufficient. If the content exceeds 25 percent by mass, on the other hand, the storage stability of the photocurable inkjet printing ink composition proposed by the present invention will drop.

### <Sensitizer>

The photocurable inkjet printing ink composition proposed by the present invention may further use a photosensitizer (compound) concomitantly, which has light-absorbing properties primarily in a UV wavelength region of 400 nm or longer and expresses a curing reaction sensitization function under the light of wavelengths in this range, for the purpose of promoting its curing property under UV light.

It should be noted that "...expresses...sensitization function under the light of wavelengths of 400 nm or longer" means the sensitizer has light-absorbing properties in a wavelength region of 400 nm or longer. By using such sensitizer, the LED curing property of the photocurable inkjet printing ink composition proposed by the present invention can be promoted.

The aforementioned photosensitizer may be an anthracene-based sensitizer, thioxanthone-based sensitizer, or the like, among which a thioxanthone-based sensitizer is preferred. Any of these sensitizers may be used alone, or two or more types may be combined.

Specific examples include 9,10-dibutoxy anthracene, 9,10-diethoxy anthracene, 9,10-dipropoxy anthracene, 9,10-bis(2-ethyl hexyloxy)anthracene, and other anthracene-based sensitizers, as well as 2,4-diethyl thioxanthone, 2-isopropyl thioxanthone, 4-isopropyl thioxanthone, and other thioxanthone-based sensitizers. Representative examples of commercial products include DBA and DEA (manufactured by Kawasaki Kasei Chemicals) for anthracene-based sensitizers, and DETX and ITX (manufactured by Lambson) for thioxanthone-based sensitizers, and the like.

The sensitizer content is preferably in a range of 0 to 8 percent by mass relative to the total mass of photopolymerizable components. Any content exceeding 8 percent by mass does not improve the effects but represents an excessive addition instead, which is not desirable.

### <Colorant >

The photocurable inkjet printing ink composition proposed by the present invention may be formulated to contain a colorant of each hue, in order to obtain a photocurable inkjet printing ink composition having each color. In some cases, even a primer may be colored so that formation or non-formation of a primer layer can be checked.

For these coloring agents, any pigments and dyes traditionally used in normal photocurable inkjet printing ink composition may be used without any limitation; when lightfastness is considered, however, pigments such as organic pigments and inorganic pigments are preferred.

Organic pigments include, for example, dye rake pigments, as well as azo, benzimidazolone, phthalocyanine, quinacridone, anthraquinone, dioxazine, indigo, thioindigo, perylene, perinone, diketopyrrolopyrrole, isoindolinone, nitro, nitroso, anthraquinone, flavanthrone, quinophthalone, pyranthrone, and indanthrone pigments, and the like. Inorganic pigments include carbon black, titanium oxide, red iron oxide, graphite, iron black, chromium oxide green, and aluminum hydroxide, and the like.

Also, specific examples of pigments for the photocurable inkjet printing ink composition proposed by the present invention are listed below for each representative hue.

First, yellow pigments for using the present invention as a photocurable inkjet printing yellow ink composition include, for example, C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, etc., among which C. I. Pigment Yellow 150, 155, 180, 213, etc., are preferred.

Magenta pigments for using the present invention as a photocurable inkjet printing magenta ink composition include, for example, C. I. Pigment Red 5, 7, 12, 22, 38, 48: 1, 48: 2, 48: 4, 49: 1, 53: 1, 57, 57: 1, 63: 1, 101, 102, 112, 122, 123, 144, 146, 149, 168, 177, 178, 179, 180, 184, 185, 190, 202, 209, 224, 242, 254, 255, 270, C. I. Pigment Violet 19, etc., among which C. I. Pigment Red 122, 202, Pigment Violet 19, etc., are preferred.

Cyan pigments for using the present invention as a photocurable inkjet printing cyan ink composition include, for example, C. I. Pigment Blue 1, 2, 3, 15, 15: 1, 15: 2, 15: 3, 15: 4, 15: 6, 16, 18, 22, 27, 29, 60, etc., among which C. I. Pigment Blue 15:4, etc., are preferred.

Black pigments for using the present invention as a photocurable inkjet printing black ink composition include, for example, carbon black (C. I. Pigment Black 7), etc.

White pigments for using the present invention as a photocurable inkjet printing white ink composition include, for example, titanium oxide, aluminum oxide, etc., among which titanium oxide that has been surface-treated with any of alumina, silica, and various other materials is preferred.

The content of any colorant in the photocurable inkjet printing ink composition proposed by the present invention is preferably 1 to 20 percent by mass relative to the total quantity of the photocurable inkjet printing ink composition. If the content of the colorant is lower than 1 percent by mass, the image quality of the obtained printed matter tends to drop. If the content exceeds 20 percent by mass, on the other hand, viscosity properties of the photocurable inkjet printing ink composition tend to be negatively affected.

### <Pigment Dispersant>

Also, the photocurable inkjet printing ink composition proposed by the present invention may contain a pigment dispersant as necessary.

A pigment dispersant is used to improve the pigment dispersibility and the preservation stability of the ink composition proposed by the present invention, and any of the traditionally used pigment dispersants may be used without any limitation; among these, however, use of polymeric dispersants is preferred. These pigment dispersants include carbodiimide-based dispersants, polyester amine-based dispersants, aliphatic amine-based dispersants, modified polyacrylate-based dispersants, modified polyurethane-based dispersants, multiple-chain polymeric nonionic dispersants, polymeric ion active agents, etc. Any of these pigment dispersants may be used alone, or two or more types may be mixed and used.

Preferably the aforementioned pigment dispersant is contained by 1 to 200 parts by mass when the quantity of all pigment used represents 100 parts by mass. If the content of the pigment dispersant is less than 1 part by mass, the pigment dispersibility and the storage stability of the ink composition proposed by the present invention may drop. On the other hand, allowing the pigment dispersant to be contained by more than 200 parts by mass, although possible, may not produce differences in effects. A more preferable lower limit, and a more preferable upper limit, of the content of the pigment dispersant are 5 parts by mass and 60 parts by mass, respectively.

### <Surface active Agent>

Preferably the photocurable inkjet printing ink composition proposed by the present invention contains any of the silicone-based surface active agents and other surface active agents that are traditionally used in photocurable inkjet printing ink composition as surface active agents, depending on the inkjet head used, in order to improve the discharge stability.

Specific examples of silicone-based surface active agents include polyether modified silicone oil, polyester-modified polydimethyl siloxane, polyester-modified methyl alkyl polysiloxane (BYK-315N), etc. Any of the foregoing may be used alone, or two or more types may be combined.

Preferably the content of the surface active agent in the ink composition proposed by the present invention is 0.005 to 1.0 percent by mass. If the content is lower than 0.005 percent by mass, the surface tension of the photocurable inkjet printing ink composition proposed by the present invention will increase and its discharge stability from the inkjet head will drop. If the content exceeds 1.0 percent by mass, on the other hand, more bubbles will generate in the photocurable inkjet printing ink composition and its discharge stability will drop.

### <Additives>

If necessary, various additives may be added to the photocurable inkjet printing ink composition proposed by the present invention to express various functionalities. Specific examples include photostabilizers, surface treatment agents, antioxidants, antiaging agents, crosslinking promoters, quinone-based and other polymerization inhibitors, dioctyl maleate and other plasticizers, preservatives, pH adjusting agents, defoaming agents, moisturizing agents, etc.

Preferably the photocurable inkjet printing ink composition proposed by the present invention, as obtained from the aforementioned materials, has a flash point of 70°C or higher when measured with a Seta closed-cup flash point tester according to a method compliant with JIS-K2265. Having such a flash point, the ink composition proposed by the present invention can be classified under Flammable Liquid Category 4 as specified by the GHS, which ensures excellent safety backed by low flammability, and the like.

Additionally, while it can contain a solvent, preferably the photocurable inkjet printing ink composition proposed by the present invention is solvent-free, and when it is solvent-free, its viscosity at 25°C is preferably 100 cps or lower, or more preferably 20 cps or lower, or yet more preferably 10 cps or lower. Furthermore, the photocurable inkjet printing ink composition can be designed to have a specific viscosity so that it can be adapted to each inkjet system.

It should be noted that, in this Specification, viscosity represents the viscosity measured under the conditions of 25°C and 5 to 100 rpm using a viscometer (product name: Viscometer Model RE215L, manufactured by Toki Sangyo).

The photocurable inkjet printing ink composition proposed by the present invention, when formulated to contain specific quantities of the specific photopolymerizable components and acylphosphine oxide-based photopolymerization initiator or thioxanthone-based photopolymerization initiator mentioned above, can deliver excellent curing property under ultraviolet light, especially ultraviolet light from a light source that uses light-emitting diodes (LED), good adhesion to base materials constituted by polypropylene and other polyolefin materials, excellent discharge stability and storage stability, and excellent all-round safety backed by high flash point, low skin irritability, and low odor.

The method for preparing the ink composition proposed by the present invention is not limited in any way, and it may be prepared by adding all of the aforementioned materials and mixing them using a bead mill, triple roll mill, etc.

It should be noted that the ink composition proposed by the present invention may also be prepared by mixing the pigment, pigment dispersant, and photopolymerizable components to obtain a concentrated base ink beforehand, and then further adding to this concentrated base ink the photopolymerizable components, photopolymerization initiator, and surface active agent, and other additives as necessary, to a desired compositional makeup of photocurable inkjet printing ink composition.

Specific methods for using the ink composition proposed by the present invention include one that involves discharging the ink composition proposed by the present invention onto a base material from an inkjet head, and then exposing to light and thereby curing the coating film formed by the ink composition proposed by the present invention that has landed on the base material.

For example, its discharging onto the base material (printing of images) may be achieved by supplying the ink composition proposed by the present invention to a low-viscosity printer head of an inkjet recording printer, and then discharging the ink composition onto the base material from the printer head in such a way that the thickness of the coating film becomes 1 to 60 µm, for example. Also, the light exposure and curing (curing of images) may be achieved by irradiating light to the coating film formed by the ink composition proposed by the present invention that has been applied on the base material as images.

For the inkjet recording printer system with which to print the ink composition proposed by the present invention, any traditionally used inkjet recording printer system may be used. It should be noted that, if a continuous-type inkjet recording printer system is used, a conductive additive is further added to the ink composition proposed by the present invention to adjust its conductivity level.

The light source used in the curing of the coating film as mentioned above may be ultraviolet light (UV), ultraviolet light (light-emitting diode (LED)), electron beam, visible light, etc., among which light-emitting diode (LED) that generates ultraviolet light with an emission peak wavelength in a range of 350 to 420 nm is preferred from the environmental viewpoint.

When printed on the surface of a molded product of polyolefin and then cured by light, the photocurable inkjet printing ink composition proposed by the present invention can produce a printing layer that conveys some information, but since the cured layer also has a surface that exhibits excellent adhesion to general ink compositions, it can be formed, on the surface of a molded product of polypropylene or other polyolefin, as a primer layer to be printed with general inks.

And, when the ink composition proposed by the present invention is used to form a primer layer, any of general ink compositions including photocurable and non-photocurable ink compositions may be selected and used for the ink layer to be formed on top.

### (Examples)

### [Examples 1 to 5 and Comparative Examples 1 to 4]

### Preparation of Photocurable Inkjet Printing Ink Composition

The present invention is explained in greater detail below by giving examples, but the present invention is not limited to these examples. It should be noted that, unless otherwise specified, "%" indicates "percent by mass," while "part" indicates "part by mass."

The materials used in the following Examples and Comparative Examples are listed below.

### [Viscosity Measurement of Ink Compositions]

The photocurable inkjet printing ink composition obtained under Examples 1 to 5 and Comparative Examples 1 to 4 were each measured for viscosity at 25°C using a viscometer (product name: Viscometer Model RE215L, manufactured by Toki Sangyo). The results are shown in Table 1.

### [Adhesion to Polypropylene Film (PP)]

The photocurable inkjet printing ink composition obtained under Examples 1 to 5 and Comparative Examples 1 to 4 were each applied on the surface of a polypropylene film using a No. 4 bar coater, and then irradiated with ultraviolet light and cured. On the surface of the obtained cured coating film, an ink composition (containing 13.0 percent by mass of vinyl caprolactam, 25.0 percent by mass of isobornyl acrylate, 45.4 percent by mass of benzyl acrylate, and other materials such as polymerization initiator and pigment) was applied using a No. 4 bar coater and then cured.

On the surface of the cured ink film, a piece of Nichiban's cellophane tape was attached, after which the cellophane tape was peeled and the degree of peeling of the cured ink film surface (degree of separation of the interface between the polypropylene film and the cured layer of each photocurable inkjet printing ink composition) was evaluated visually.
○: There was no peeling.
×: The coating film peeled completely.

### [Tackiness]

The photocurable inkjet printing ink composition obtained under Examples 1 to 5 and Comparative Examples 1 to 4 were each applied on the surfaces of two polypropylene films using a No. 4 bar coater, and then irradiated with ultraviolet light to obtain cured coating films.

The cured coating films on the surfaces of the obtained two polypropylene films were placed on top of each other and then separated, to check the degree of sticking.
⊙: Sticking did not occur.
○: Sticking occurred, but the cured coating films did not peel when the films were separated.
×: The cured coating films stuck to each other and peeled when the films were separated.

**[Table 1]**

| | Composition | Examples | | | | | Comparative Examples | | | |
|---|---|---|---|---|---|---|---|---|---|---|
| | | 1 | 2 | 3 | 4 | 5 | 1 | 2 | 3 | 4 |
| Inorganic pigment | Aluminum oxide (grain size 80 nm, AEROXIDE Alu-C, Nippon Aerosil, solids content 10%) | 3.0 | 3.0 | 3.0 | 3.0 | 3.0 | 3.0 | 3.0 | 3.0 | 3.0 |
| Photocurable resins | ACMO (Tg = 145°C, monofunctional monomer 2) | 45.0 | 49.1 | 50.92 | | | 30.0 | 50.0 | | 57.1 |
| | V#190 (Tg = - 67°C, monofunctional monomer 1) | 27.1 | 31.0 | 30.68 | 22.5 | 22.5 | 42.1 | 32.00 | 53.1 | 15 |
| | HDDA (Tg = 43°C, bifunctional monomer) | | | | | | | | 10.0 | |
| | IBXA (Tg = 97°C, monofunctional monomer 2) | | | | 40.6 | | | | | |
| | VCAP (Tg = 125°C, monofunctional monomer 2) | | | | | 40.6 | | | | |
| | CN371NS (Tg = -39°C, amine - modified oligomer) | | | | 4.0 | 4.0 | | | 4.0 | |
| Chlorinated polyolefin | 814HS | 10 | 2 | 0.50 | 15 | 15 | 10 | 0.1 | 15 | 10 |
| Photopolymerization initiator | TPO | 12 | 12 | 12 | 12 | 12 | 12 | 12 | 12 | 12 |
| Additives | Dioctyl maleate | 1.9 | 1.9 | 1.9 | 1.9 | 1.9 | 1.9 | 1.9 | 1.9 | 1.9 |
| | Quinone-based polymerization inhibitor | 0.5 | 0.5 | 0.5 | 0.5 | 0.5 | 0.5 | 0.5 | 0.5 | 0.5 |
| | Silicone-based surface active agent BYK-315N (solids content 25%) | 0.5 | 0.5 | 0.5 | 0.5 | 0.5 | 0.5 | 0.5 | 0.5 | 0.5 |
| | Total | 100 | 100 | 100 | 100 | 100 | 100 | 100 | 100.0 | 100 |
| Evaluations | Viscosity (cps) | 28 | 12.3 | 8.5 | 74.9 | 57.6 | 28 | 8.2 | 53 | 99 |
| | PP adhesion | ○ | ○ | ○ | ○ | ○ | ○ | X | X | X |
| | Tackiness | ○ | ○ | ○ | ○ | ○ | X | ○ | ○ | ⊚ |
| Monofunctional monomer 1 | | 27.1 | 31.0 | 30.7 | 22.5 | 22.5 | 42.1 | 32.0 | 53.1 | 15.0 |
| Monofunctional monomer 2 | | 45.0 | 49.1 | 50.9 | 40.6 | 40.6 | 30.0 | 50.0 | 0.0 | 57.1 |
| Monofunctional monomer 1 / Monofunctional monomer 2 | | 1.66 | 1.58 | 1.66 | 1.80 | 1.80 | 0.71 | 1.56 | 0.00 | 3.81 |

From the results shown in Table 1 above, the ink composition proposed by the present invention presents such effects as excellent adhesion and low tackiness, based on Examples 1 to 5 that provide photocurable inkjet printing ink composition according to the present invention.

Looking at the results of Comparative Examples 1 to 4, however, tackiness manifested in Comparative Example 1 wherein the mass-based ratio of the content of (B) and that of (C) were low. Adhesion was poor in Comparative Example 2 wherein the content of (A) was small, in Comparative Example 3 wherein no (C) was contained, and in Comparative Example 4 wherein the mass-based ratio of the content of (B) and that of (C) were high.

These results show that, as a photocurable inkjet printing ink composition having a specific compositional makeup, the present invention delivers a good balance of the effect of exhibiting sufficient adhesion to molded products of polypropylene and other polyolefins and the effect of keeping the tackiness of the ink coating film low.

## Claims

1. A photocurable inkjet printing ink composition containing (A) to (C) below:
(A) a chlorinated polyolefin;
(B) monofunctional monomer 1 with a glass transition temperature (Tg) of 0°C or below; and
(C) monofunctional monomer 2 with a glass transition temperature (Tg) of 60°C or above;
wherein:
a content of (A) in the ink composition is 0.2 percent by mass or higher;
a total content of (B) and (C) in the ink composition is 40 percent by mass or higher; and
a mass-based ratio of a content of (B) and a content of (C), or (C)/(B), is 0.80 to 3.00.
